# EUROPEAN PATENT APPLICATION

(11) **EP 2 587 579 A1**
(43) Date of publication of application: **01.05.2013**
(21) Application number: 11797915.3
(22) Date of filing: 25.04.2011
(51) Int. Cl.: H01M 8/16, H01M 4/96

(54) **BIOFUEL CELL**

(30) Priority: 25.06.2010 JP 2010144829
(71) Applicant: Sony Corporation, Tokyo 108-0075 (JP)
(72) Inventor: SAMUKAWA, Tsunetoshi, Tokyo 108-0075 (JP); SUGIYAMA, Taiki, Tokyo 108-0075 (JP); SAKAI, Hideki, Tokyo 108-0075 (JP); TOKITA, Yuichi, Tokyo 108-0075 (JP)
(74) Representative: Müller - Hoffmann & Partner
(86) International application number: PCT/JP2011/060568
(87) International publication number: WO 2011/162027

(57) **Abstract**

A biofuel cell is formed by disposing an anode (negative electrode) to be a fuel electrode, an anode current collector, a separator, a cathode current collector, a cathode (positive electrode) to be an air electrode and a gas-liquid separation membrane in this order between a fuel tank and a positive electrode cover. During the formation, an electrode formed of a carbon fiber fabric having a network structure constituted by a monofilament strand of a carbon fiber and has a redox enzyme on the surface is used in at least the anode.

## Description

### TECHNICAL FIELD

The present invention relates to a biofuel cell using a redox enzyme. More specifically, the present invention relates to a technique to improve an electrode performance.

### BACKGROUND ART

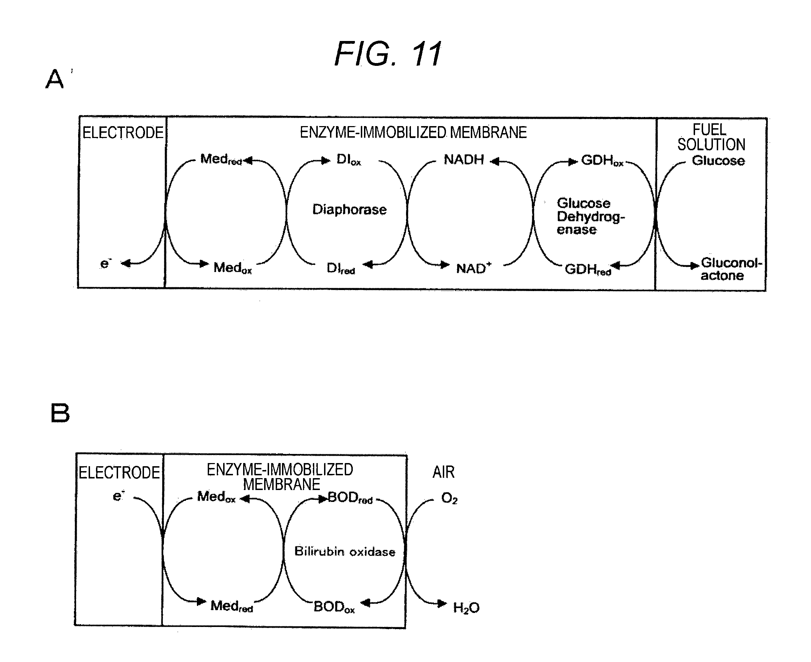

A biofuel cell using a redox enzyme as a reaction catalyst can take out electrons effectively from fuels that cannot be utilized in general industrial catalysts such as glucose and ethanol, and thus gains attentions as a next-generation fuel cell that has a high capacity and high safety. Fig. 11A is a drawing showing a reaction scheme of a negative electrode of a biofuel cell using an enzyme. Fig. 11B is a drawing showing a reaction scheme of a positive electrode of a biofuel cell using an enzyme. For example, as shown in Figs. 11A and 11B, in the case of a biofuel cell using glucose as a fuel, an oxidation reaction of glucose proceeds on a negative electrode (anode) and electrons are taken out, whereas a reduction reaction of oxygen (O₂) in the air proceeds on a positive electrode (cathode).

On the other hand, output differs depending on the materials of electrodes in biofuel cells. Therefore, it is necessary to select a suitable electrode material so as to attain a high-output cell. Therefore, electrodes mainly using carbon materials are used in conventional biofuel cells (for example, see Patent Documents 1 to 5). For example, electrodes formed of porous carbon such as carbon felt are used in the biofuel cell described in Patent Document 1.

Furthermore, Patent Document 2 discloses a process for forming a porous carbon electrode by applying a carbon ink containing porous carbon and a void-forming material powder to a carbon substrate such as carbon felt and carbon cloth, drying, and removing the void-forming material powder. In addition, in the enzyme electrodes for biofuel cells described in Patent Documents 3 to 5, carbon paper, carbon cloth and the like are used as sheet-like carbon substrates for fixing an enzyme.

### CITATION LIST

### PATENT DOCUMENTS

Patent Document 1: JP 2009-158466 A
Patent Document 2: JP 2009-181889 A
Patent Document 3: JP 2010-43978 A
Patent Document 4: JP 2006-508519 W
Patent Document 5: JP 2007-324005 A

### SUMMARY OF THE INVENTION

### PROBLEMS TO BE SOLVED BY THE INVENTION

However, the conventional biofuel cells mentioned above have problems shown below. Namely, electrodes formed of porous carbon which are generally used in biofuel cells at present have a problem in that it is difficult to uniformly form enzyme-immobilized membranes on the surfaces thereof and thus the reactivity as electrodes is not sufficient. Furthermore, porous carbon electrodes also have a problem in that the physical stability is decreased when the porosity thereof is increased.

On the other hand, the electrodes using a sheet-like carbon material such as carbon cloth and carbon paper described in Patent Documents 3 to 5 were selected from the viewpoints of electroconductive materials having a large surface area, and the physical stability and liquid permeability were not considered. Therefore, in the case where such sheet-like carbon material is used in a biofuel cell, there is a problem in that a high current density is difficult to obtain.

Therefore, a main object of the present invention is to improve the electrode performance without decreasing the surface areas, physical stability and liquid permeability of electrodes, to thereby provide a biofuel cell having high output.

### SOLUTION TO PROBLEM

The biofuel cell according to the present invention comprises an electrode that is formed of a carbon fiber fabric having a network structure constituted by a monofilament strand of a carbon fiber and comprises a redox enzyme on the surface thereof.

As used herein, the surface of the electrode includes the entirety of the outer surface of the electrode and the inner surface of a void inside the electrode, and the same also applies to the following descriptions.

In the present invention, since the electrodes are formed of a carbon fiber fabric, thin electrodes having high strength and flexibility can be attained. Furthermore, since the electrodes of the carbon fiber fabric have large surface areas, an excellent electrode performance can be obtained as compared to conventional biofuel cells.

In this biofuel cell, it is desirable that at least a negative electrode be formed of the carbon fiber fabric.

Alternatively, both of the negative electrode and a positive electrode may be formed of the carbon fiber fabric.

Furthermore, current collectors that are crimp-contacted to the electrodes may also be formed of the carbon fiber fabric.

In addition, a carbon fiber fabric having a monofilament diameter of, for example, 15 µm or less can be used as the carbon fiber fabric.

### EFFECTS OF THE INVENTION

According to the present invention, since the electrodes are formed of a carbon fiber fabric, the electrode performance can be improved without decreasing the surface areas, physical stability and liquid permeability of the electrodes, and thus a biofuel cell having high output can be attained.

### BRIEF DESCRIPTION OF DRAWINGS

Fig. 1 is an exploded perspective view showing the constitution of a biofuel cell of an embodiment of the present invention.
Fig. 2 is a drawing schematically showing the principle of power generation of the biofuel cell according to an embodiment of the present invention.
Figs. 3A to 3C are SEM photographs of a carbon fiber fabric of Example 1.
Figs. 4A to 4C are SEM photographs of a carbon fiber fabric of Example 2.
Figs. 5A to 5C are SEM photographs of a carbon fiber fabric of Example 3.
Figs. 6A to 6C are SEM photographs of a carbon fiber fabric of Comparative Example 1.
Figs. 7A to 7C are SEM photographs of a carbon fiber fabric of Comparative Example 2.
Figs. 8A and 8B are graphs showing the results of potentiostatic measurements.
Fig. 9 is a graph showing the relationship between the monofilament diameter and current density, wherein the horizontal axis shows the monofilament diameter of the carbon fiber fabric and the vertical axis shows the current density at after 300 seconds.
Fig. 10A is an SEM photograph showing the state in which the enzyme is fixed on the carbon fiber fabric electrode of Example 1. Fig. 10B is an SEM photograph showing the state in which the enzyme is fixed on the porous carbon electrode of Comparative Example 3.
Fig. 11A is a drawing showing a reaction scheme of a negative electrode of a biofuel cell using an enzyme. Fig. 11B is a drawing showing a reaction scheme of a positive electrode of a biofuel cell using an enzyme.

### MODE FOR CARRYING OUT THE INVENTION

Hereinafter the embodiments for carrying out the present invention will be explained in detail with reference to the accompanied drawings. The present invention is not construed to be limited to the respective embodiments shown below.

### [Entire structure]

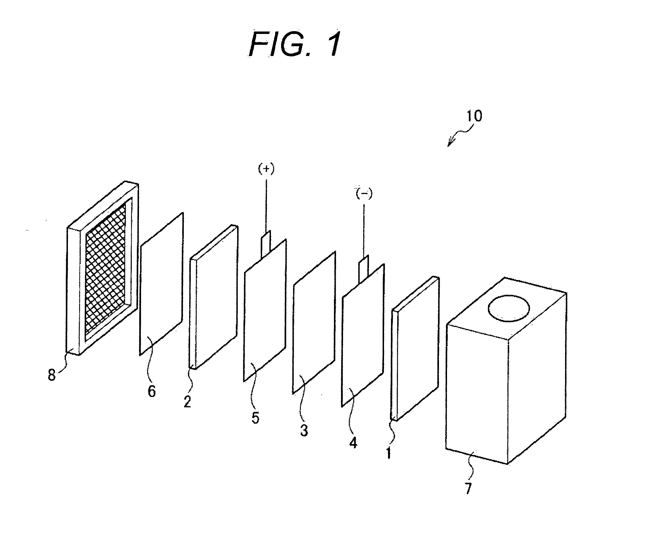

First, the biofuel cell according to the embodiment of the present invention will be explained. Fig. 1 is an exploded perspective view showing the constitution of the biofuel cell of the embodiment of the present invention. As shown in Fig. 1, in the biofuel cell 10 of the present embodiment, an anode (negative electrode) 1 to be a fuel electrode, an anode current collector 4, a separator 3, a cathode current collector 5, a cathode (positive electrode) 2 to be an air electrode and a gas-liquid separation membrane 6 are disposed in this order between a fuel tank 7 and a positive electrode cover 8.

### [Anode 1 and cathode 2]

In the biofuel cell 10 of the present embodiment, the anode 1 and/or the cathode 2 is/are formed of a carbon fiber fabric having a network structure constituted by a monofilament strand of a carbon fiber, and have/has a redox enzyme that functions as a reaction catalyst on the surface(s) thereof. An electrode formed of this carbon fiber fabric is desirably applied to at least the anode 1, more desirably applied to both the anode 1 and the cathode 2.

Since the anode 1 is a fuel electrode with which a fuel solution contacts, in order to improve the performance thereof, it is necessary not only to increase the surface area but also to enhance the physical stability and liquid permeability. Specifically, since a liquid fuel has a lower permeation velocity (diffusion velocity) than that of a gas fuel, the quality of the permeability in an electrode significantly affects the electrode performance. Therefore, when a carbon fiber fabric having a network structure constituted by a monofilament strand of a carbon fiber, which has a large surface area and is excellent in physical stability and liquid permeability, is used in the anode 1, the electrode performance is significantly improved, and the output of the entirety of the cell can be effectively enhanced.

Furthermore, as a matter of course, also in the case where the carbon fiber fabric having a network structure constituted by a monofilament strand of a carbon fiber is used in the cathode 2, the electrode performance is improved and the output of the entirety of the cell can be enhanced as compared to the cases where an electrode formed of a conventional electrode material is used. Furthermore, it is preferable to use a carbon fiber fabric having a monofilament diameter of 15 µm or less as the carbon fiber fabric for forming each electrode. By doing so, it becomes possible to increase the surface area of the cell without decreasing the porosity that affects the liquid permeability, and thus the electrode performance, specifically the performance of the anode 1 can be improved more.

In addition, since the perviousness of a fuel affects the electrode property of the anode 1 and the perviousness of oxygen affects the electrode property of the cathode 2, the network structure, monofilament diameter and the like can be selected in accordance with the requirements thereof. Accordingly, in the biofuel cell 10 of the present embodiment, carbon fiber fabrics having network structures and monofilament diameters that differ from each other may be used in the anode 1 and the cathode 2.

On the other hand, as the enzyme that is fixed on the surface of the anode 1, for example, in the case where the fuel component is glucose, glucose dehydrogenase (GDH) that decomposes glucose can be used. Furthermore, in the case where a monosaccharide such as glucose is used as a fuel component, it is desirable that a coenzyme oxidase and an electron mediator be fixed together with an oxidase that promotes the oxidation of a monosaccharide and decompose the monosaccharide such as GDH on the surface of the anode.

The coenzyme oxidase oxidizes a coenzyme that is reduced by an oxidase (for example, NAD⁺, NADP⁺ and the like) and a reduced form of a coenzyme (for example, NADH, NADPH and the like), and examples include diaphorase and the like. By the action of this coenzyme oxidase, electrons are generated when the coenzyme returns to an oxidized form, and the electrons are transmitted from the coenzyme oxidase to the electrode through the electron mediator.

Furthermore, it is preferable to use a compound having a quinone backbone as the electron mediator, and a compound having a naphthoquinone backbone is specifically preferable. Specifically, 2-amino-1,4-naphthoquinone (ANQ), 2-amino-3-methyl-1,4-naphthoquinone (AMNQ), 2-methyl-1,4-naphthoquinone (VK3), 2-amino-3-carboxy-1,4-naphthoquinone (ACNQ) and the like can be used. Furthermore, as the compound having a quinone backbone, for example, anthraquinone and derivatives thereof can also be used besides the compounds having a naphthoquinone backbone. Furthermore, where necessary, one kind or two or more kinds of other compound that acts as an electron mediator may be fixed together with the compound having a quinone backbone.

On the other hand, in the case where a polysaccharide is used as a fuel component, it is desirable to fix a degradative enzyme that promotes the degradation such as hydrolysis of the polysaccharide to generate a monosaccharide such as glucose besides the above-mentioned oxidase, coenzyme oxidase, coenzyme and electron mediator. The "polysaccharide" as used herein is a polysaccharide in the broad sense of the term, refers to all carbohydrates that generate two or more molecules of a monosaccharide by hydrolysis, and comprises oligosaccharides such as disaccharides, trisaccharides and tetrasaccharides. Specific examples may include starch, amylose, amylopectin, glycogen, cellulose, maltose, sucrose and lactose, and the like. These are formed by binding of two or more monosaccharides, and glucose is included as a monosaccharide of a binding unit in all of the polysaccharides.

Amylose and amylopectin are components included in starch, and starch is a mixture of amylose and amylopectin. For example, in the case where glucoamylase is used as a degradative enzyme for a polysaccharide and glucose dehydrogenase is used as an oxidase for degrading a monosaccharide, a polysaccharide that can be degraded to glucose by glucoamylase can be used as a fuel component. Examples of such polysaccharide may include starch, amylose, amylopectin, glycogen and maltose, and the like. Glucoamylase is a degradative enzyme that hydrolyzes α-glucan such as starch to generate glucose, and glucose dehydrogenase is an oxidase that oxidizes β-D-glucose to form D-glucono-δ-lactone.

On the other hand, in the case where a redox enzyme is also fixed on the cathode 2, for example, bilirubin oxydase, laccase and ascorbate oxydase, and the like can be used. Furthermore, examples of the electron mediator that is fixed together with these enzymes may include potassium hexacyanoferrate, potassium ferricyanide and potassium octacyanotungstate, and the like.

The anode 1 and cathode 2 are not limited to those in which a redox enzyme is fixed on the surface, and it is sufficient that the redox enzyme is present on the surfaces of the electrodes; for example, it is also possible to use electrodes to which a microorganism that has a redox enzyme and acts as a reaction catalyst is attached, and the like.

### [Separator 3]

The separator 3 prevents short-circuiting of the respective electrodes (anode 1 and cathode 2), and is formed of a material that allows the permeation of protons such as a nonwoven fabric, cellophane and PTFE (polytetrafluoroethylene). Furthermore, the thickness and physical properties thereof are not specifically limited.

### [Current collectors 4 and 5]

The material for the current collectors 4 and 5 is not specifically limited, and may be a material that can be electrically connected to outside and does not cause an electrochemical reaction in the biofuel cell. Specific examples may include metal materials such as Pt, Ag, Au, Ru, Rh, Os, Nb, Mo, In, Ir, Zn, Mn, Fe, Co, Ti, V, Cr, Pd, Re, Ta, W, Zr, Ge and Hf, alloys such as alumel, brass, duralumin, bronze, nickelin, platinum rhodium, permalloy, permendur, German silver and phosphor bronze, electroconductive polymers such as polyacetylenes, carbon-based materials such as carbon felt, carbon paper, carbon fibers or laminates of carbon microparticles, borides such as HfB₂, NbB, CrB₂ and B₄C, nitrides such as TiN and ZrN, silicides such as VSi₂, NbSi₂, MoSi₂ and TaSi₂, and composite materials thereof, and the like.

Alternatively, as the current collectors 4 and 5, a carbon fiber fabric can also be used as in the above-mentioned anode 1 and cathode 2. By this way, the electrodes adhere more tightly to the current collectors 4 and 5, thereby the connection state becomes fine. As a result, the current collecting efficiency is improved, and therefore the output of the entirety of the cell can also be increased.

### [Gas-liquid separation membrane 6]

The gas-liquid separation membrane 6 does not allow the permeation of a liquid but allows only the permeation of a gas, and for example, a PTFE membrane or the like can be used. Furthermore, the thickness and physical properties thereof are not specifically limited, and a gas-liquid separation membrane that prevents the leakage of a fuel solution and can feed oxygen that is required for a reaction to the cathode 2 may be used.

### [Positive electrode cover 8]

The positive electrode cover 8 presses the respective elements, and the material thereof and the like are not specifically limited, and it is sufficient that the cathode cover comprises air pores for taking the air outside into the cell.

### [Fuel solution]

The fuel solution is a solution that contains a fuel component such as a sugar, an alcohol, an aldehyde, a lipid and a protein, or at least one kind of these fuel components. Examples of the fuel component used in the biofuel cell 10 of the present embodiment may include sugars such as glucose, fluctose and sorbose, alcohols such as methanol, ethanol, propanol, glycerin and polyvinyl alcohol, aldehydes such as formaldehyde and acetaldehyde, organic acids such as acetic acid, formic acid and pyruvic acid, and the like. It is also possible to use fats and proteins, and organic acids and the like which are intermediate products of the sugar metabolism of these, and the like as the fuel component.

### [Behavior]

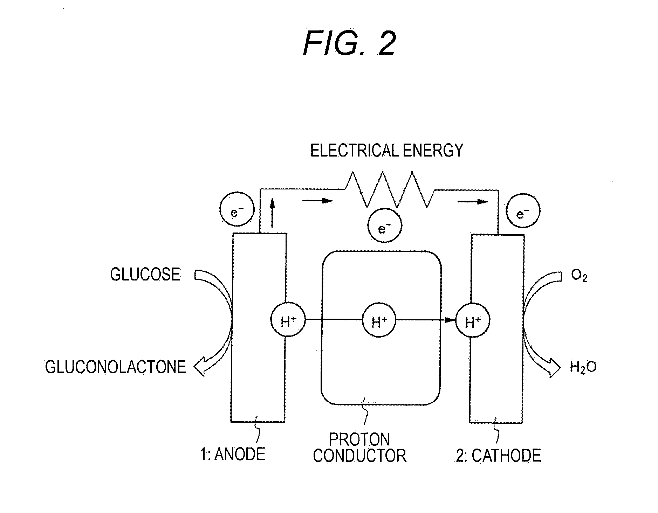

Next, the behavior of the biofuel cell 10 of the present embodiment will be explained. Fig. 2 is a drawing that schematically shows the principle of power generation of the biofuel cell 10 according to the present embodiment. In the biofuel cell 10 of the present embodiment, in the anode 1, the fuel is decomposed by the enzyme fixed on the surface, thereby an electron is taken out and a proton (H⁺) is generated. On the other hand, in the cathode 2, water (H₂O) is generated by the proton (H⁺) transported from the anode 1 through the proton conductor and the electron (e⁻) sent from the anode 1 through an outer circuit, and for example, the oxygen (O₂) that is present around the cathode 2.

In the biofuel cell 10 of the present embodiment, since the electrodes are formed of the carbon fiber fabric having a network structure constituted by a monofilament strand of a carbon fiber, the surface areas of the electrodes can be increased. Furthermore, since this carbon fiber fabric has a network structure and thus has regularity and directional property, it can allow quick permeation of the solution into the inside of the electrodes during the preparation of the electrodes and power generation.

Therefore, for example, in the preparation of the electrodes, the enzyme, mediator and the like can be applied not only to the surfaces of the electrodes but also to the inside of the electrodes, and during power generation, the fuel solution can be quickly spread to the inside of the electrodes. Furthermore, by subjecting the surfaces of the electrodes to a water repellent treatment, it is also possible to quickly spread oxygen that is a gas fuel to the inside of the electrodes. Since the reaction amount in the electrodes is increased by this way, the electrode performance can be improved.

Furthermore, when an electrode and a current collector are energized, these are pressurized by a strong pressure so as to decrease contact resistance; since the carbon fiber fabric having a network structure constituted by a monofilament strand of a carbon fiber has a high physical strength despite its high porosity, it can tolerate such a high pressure of pressurization. Furthermore, the carbon fiber fabric is also excellent in physical stability.

In addition, since the carbon fiber fabric having a network structure constituted by a monofilament strand of a carbon fiber is thin and also excellent in flexibility, the degree of freedom of designing in the preparation of a cell is increased more than in conventional porous carbon electrodes. Specifically, it is possible to form a thin film-type electrode and adjust the thickness of the electrode by lamination, and further cut the electrode into an arbitrary shape. By utilizing the flexibility of the carbon fiber nonwoven fabric, it also becomes possible to eject the fuel solution remaining in the electrode by applying a pressure during the exchange of the fuel solution.

As mentioned above, the biofuel cell of the present embodiment can improve the electrode performance without decreasing the surface areas, physical stability and liquid permeability of the electrodes, and thus can enhance the output of the entirety of the cell as compared to conventional biofuel cells.

In addition, the constitution of the present embodiment can be applied not only to a "single cell" structure in which one cell unit is disposed in the main body of a cell but also to a structure in which plural cell units are connected in series or parallel. Furthermore, electrodes formed of the above-mentioned carbon fiber fabric can be applied to either a biofuel cell of an air-exposed system in which a fuel solution contacts with only an anode, or a biofuel of a water-immersion system having a constitution in which a fuel solution contacts with both an anode and a cathode.

### Examples

Hereinafter the effect of the present invention will be specifically explained by Examples of the present invention. In the present Examples, negative electrodes (anodes) were prepared by using carbon fiber fabrics having a network structure constituted by a monofilament strand of a carbon fiber (Examples 1 to 3), carbon fiber fabrics in which a monofilament yarn is randomly accumulated (Comparative Examples 1 and 2) and porous carbon (Comparative Example 3), and the properties thereof were evaluated.

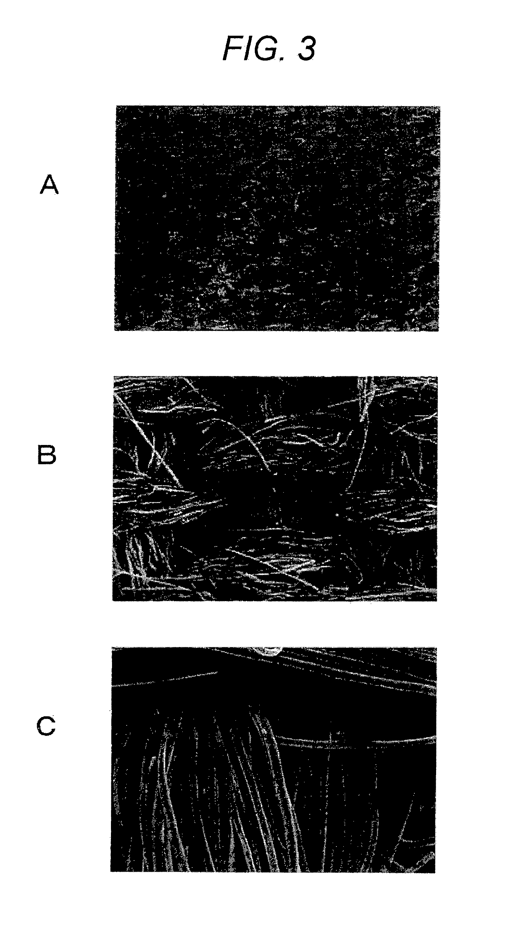

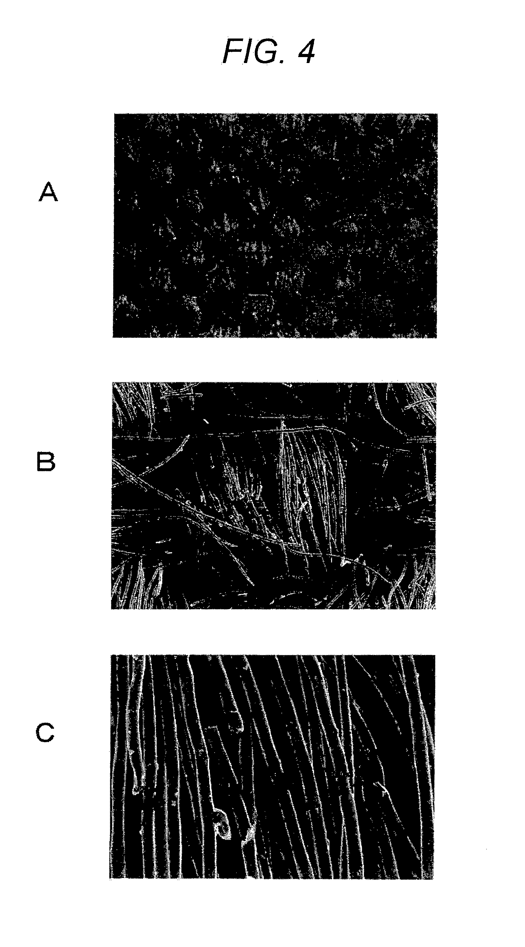

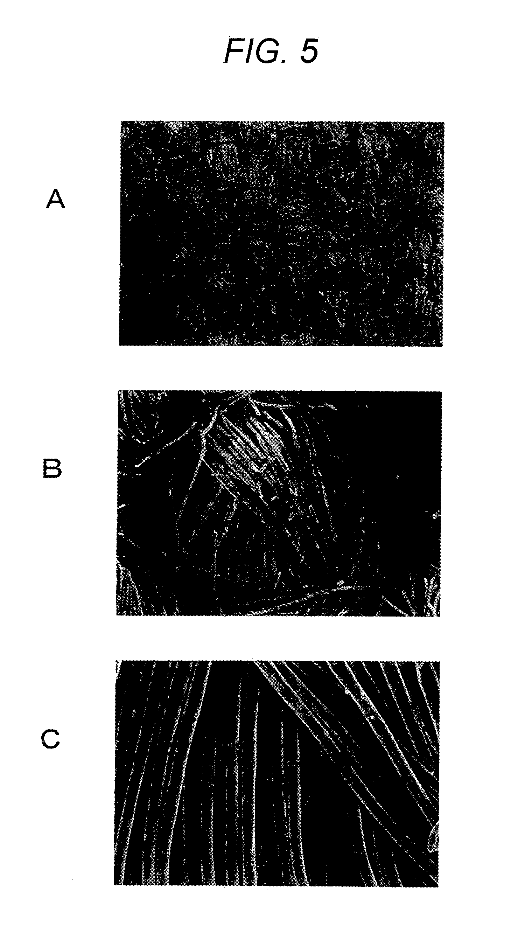

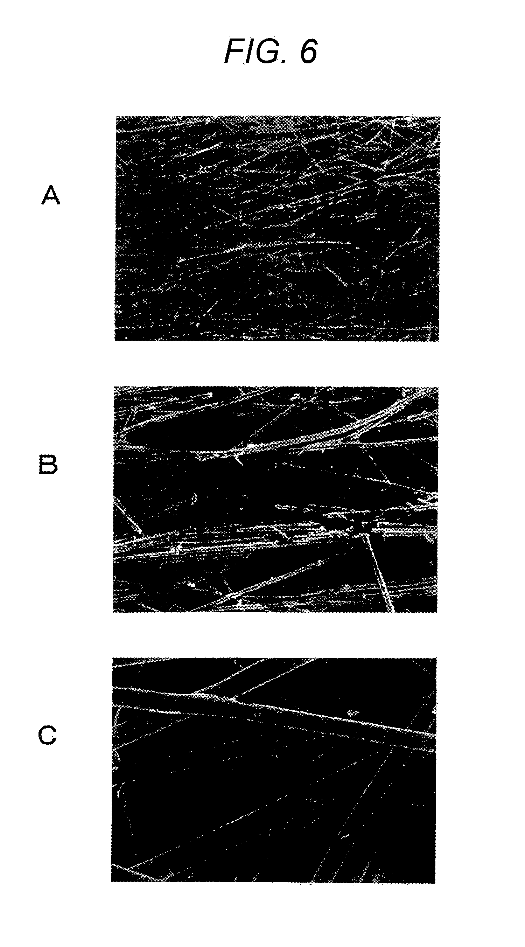

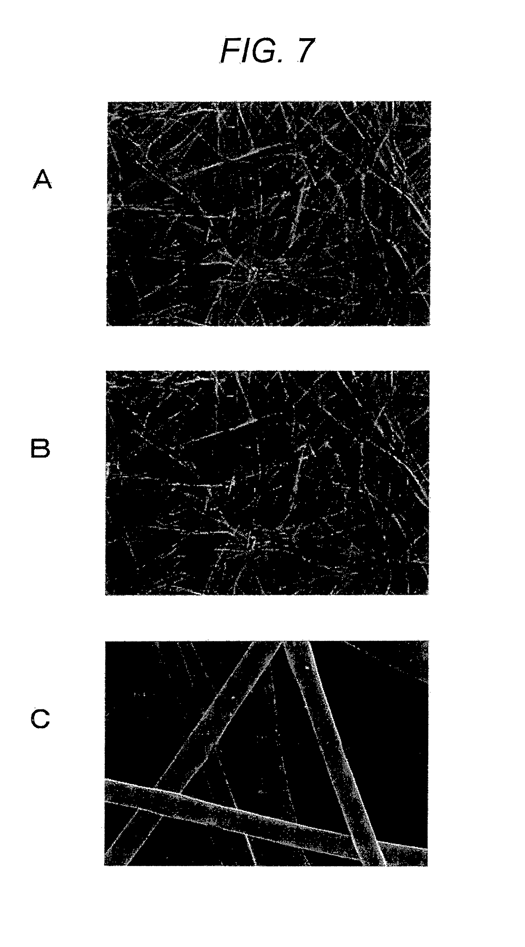

The monofilament diameters of the respective carbon fiber fabrics of Examples 1 to 3 and Comparative Examples 1 and 2 are shown in the following Table 1. The monofilament diameters shown in the following Table 1 are values (average values) obtained by observations by a scanning electron microscope (SEM). Furthermore, Figs. 3 to 7 are the SEM photographs of the carbon fiber fabrics of Examples 1 to 3 and Comparative Examples 1 and 2.

**[Table 1]**

| Carbon fiber fabric | Average monofilament diameter (µm) |
|---|---|
| Example 1 | 6.7 |
| Example 2 | 10.6 |
| Example 3 | 10.0 |
| Comparative Example 1 | 15.8 |
| Comparative Example 2 | 19.7 |

The electrodes for evaluation of Examples 1 to 3 and Comparative Examples 1 and 2 were each prepared by fixing an enzyme (GDH) and a mediator (NADH) on the carbon fiber fabric of 1 cm square. Furthermore, the porous carbon electrode of Comparative Example 3 was prepared by a similar process. The porosities of the respective electrodes of Examples 1 to 3 and Comparative Examples 1 to 3 are shown in the following Table 2. The values shown in the following Table 2 were each obtained from the mass and density, and all of the values were measured in the state before fixing the enzyme and the like.

**[Table 2]**

| Carbon fiber fabric | Porosity (%) |
|---|---|
| Example 1 | 84.4 |
| Example 2 | 81.6 |
| Example 3 | 81.1 |
| Comparative Example 1 | 90.8 |
| Comparative Example 2 | 90.0 |
| Comparative Example 3 | 83.4 |

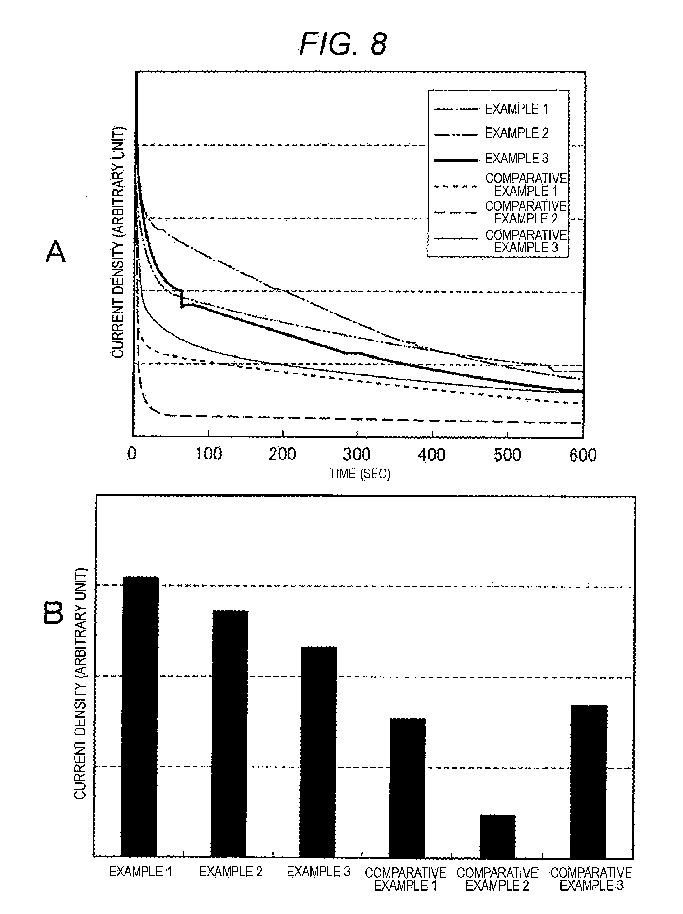

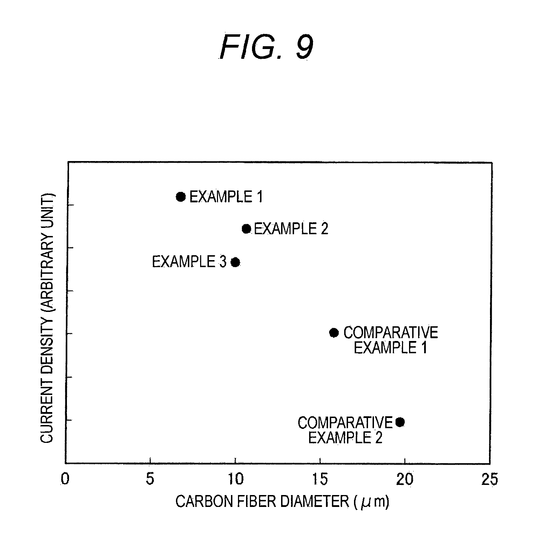

Furthermore, potentiostatic measurements (-0.35 V vs. Ag/AgCl) were conducted on the respective electrodes of Examples and Comparative Examples in an electrolyte solution (a 2.0 M imidazole-H₂SO₄ solution containing 0.6 M glucose: pH 7.0), and the current densities were compared. Figs. 8A and 8B are graphs showing the results of the potentiostatic measurements, and Fig. 9 is a graph showing the relationship between the monofilament diameter and current density, wherein the horizontal axis shows the monofilament diameter of the carbon fiber fabric and the vertical axis shows the current density at after 300 seconds.

As shown in Figs. 8A, 8B and 9, the electrodes of Examples 1 to 3 using the carbon fiber fabrics having a network structure constituted by a monofilament strand of a carbon fiber had a higher current density and more excellent electrode performance than those of the electrodes of Comparative Examples 1 and 2 using the carbon fiber fabrics in which a monofilament yarn is randomly accumulated and the porous carbon electrode of Comparative Example 3. Furthermore, it was confirmed that the current density was higher and the electrode performance was improved more as the monofilament diameter of the carbon fiber fabric decreased.

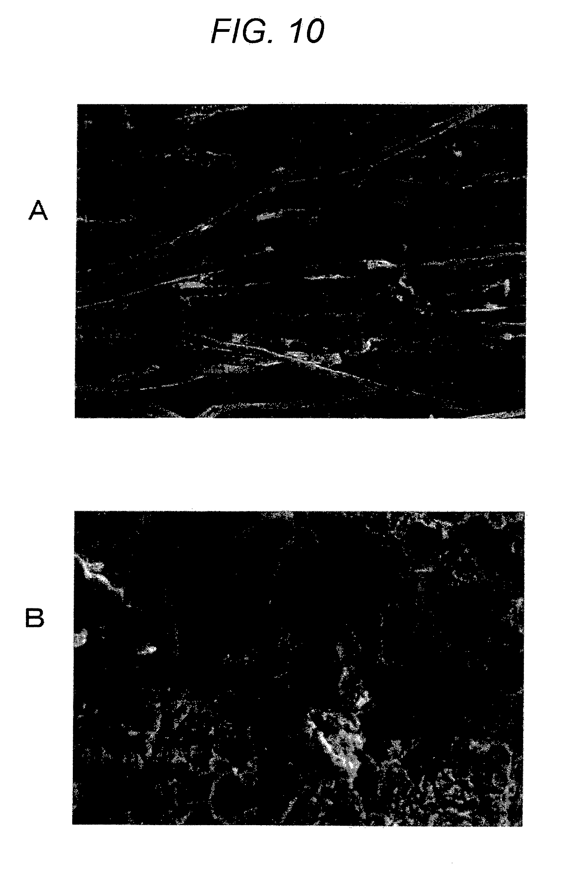

Furthermore, the state of fixing of the enzyme was observed by an SEM on the electrode using the carbon fiber fabric of Example 1 and the porous carbon electrode of Comparative Example 3. Fig. 10A is an SEM photograph showing the state in which the enzyme is fixed on the carbon fiber fabric electrode of Example 1, and Fig. 10B is an SEM photograph showing the state in which the enzyme is fixed on the porous carbon electrode of Comparative Example 3. As shown in Fig. 10B, in the porous carbon electrode of Comparative Example 3, the voids in the electrode were filled with the enzyme-immobilized membrane.

On the other hand, as shown in Fig. 10A, the enzyme-immobilized membrane adhered to the carbon fiber, but the voids were maintained to some extent in the carbon fiber fabric electrode of Example 1. Therefore, it was confirmed that the enzyme-immobilized membrane can be formed more evenly on the surface of the electrode by using the carbon fiber fabric having a network structure constituted by a monofilament strand of a carbon fiber as an electrode material.

### REFERENCE SIGNS LIST

1 Anode (negative electrode)
2 Cathode (positive electrode)
3 Separator
4, 5 Current collector
6 Gas-liquid separation membrane
7 Fuel tank
8 Cover
10 Biofuel cell

## Claims

1. A biofuel cell comprising an electrode that is formed of a carbon fiber fabric having a network structure constituted by a monofilament strand of a carbon fiber and comprises a redox enzyme on the surface thereof.

2. The biofuel cell according to claim 1, comprising at least a negative electrode formed of the carbon fiber fabric.

3. The biofuel cell according to claim 2, comprising the negative electrode and a positive electrode both of which are formed of the carbon fiber fabric.

4. The biofuel cell according to claim 3, further comprising current collectors that are crimp-contacted to the electrodes and also formed of the carbon fiber fabric.

5. The biofuel cell according to any one of claims 1 to 4, wherein the monofilament that constitutes the carbon fiber fabric has a diameter of 15 µm or less.
